# EUROPEAN PATENT APPLICATION

(11) **EP 4 832 455 A1**
(43) Date of publication of application: **28.10.2026**
(21) Application number: 25760727.5
(22) Date of filing: 06.02.2025
(51) Int. Cl.: H04L 67/1095

(54) **DATA TRANSMISSION METHOD, AND RELATED DEVICE**

(30) Priority: 29.02.2024 CN 202410235293
(71) Applicant: Huawei Technologies Co., Ltd., Shenzhen, Guangdong 518129 (CN)
(72) Inventor: CHEN, Teyan, Shenzhen, Guangdong 518129 (CN); WANG, Xiang, Shenzhen, Guangdong 518129 (CN); HE, Chao, Shenzhen, Guangdong 518129 (CN)
(74) Representative: Grünecker Patent- und Rechtsanwälte PartG mbB
(86) International application number: PCT/CN2025/075937
(87) International publication number: WO 2025/180183

(57) **Abstract**

A data transmission method and a related device are provided. The method is applied to a primary gateway. The method includes: The primary gateway receives a first trigger message from a secondary gateway, where the first trigger message includes a transmission requirement for transmission of target service data between the secondary gateway and a NAS. The primary gateway sends a connection request to the NAS, and receives a response message from the NAS. The primary gateway sends a control message, where the control message includes a first communication resource and a second communication resource that are mapped to each other. The first communication resource is a communication resource for transmission of the target service data between the primary gateway and the secondary gateway, and the second communication resource is a communication resource for transmission of the target service data between the primary gateway and the NAS. The primary gateway exchanges the target service data with the secondary gateway over the first communication resource, and exchanges the target service data with the NAS over the second communication resource, to implement transmission of the target service data between the secondary gateway and the NAS.

## Description

This application claims priority to Chinese Patent Application No. CN202410235293.5, filed with the China National Intellectual Property Administration on February 29, 2024 and entitled "DATA TRANSMISSION METHOD AND RELATED DEVICE", which is incorporated herein by reference in its entirety.

### TECHNICAL FIELD

Embodiments of this application relate to the field of wireless communication, and in particular, to a data transmission method and a related device.

### BACKGROUND

A network attached storage (network attached storage, NAS) is a dedicated data storage server that includes a storage device and built-in system software, and can provide a cross-platform file sharing function. The NAS is usually connected to a communication device of a wireless local area network (wireless local area network, WLAN). Data transmission between a user terminal and the NAS can be implemented through the communication device.

Generally, service data is exchanged between the communication device and the NAS and between the communication device and the user terminal using Ethernet packets complying with the IEEE 802.11 standards. Due to reasons such as complex cross-layer protocols, a limited air interface transmission rate, and excessive operational processes, a data transmission rate between the NAS and the user terminal is limited. Consequently, efficient data transmission and backup cannot be easily implemented, and user experience is poor.

### SUMMARY

Embodiments of this application provide a data transmission method and a related device, to increase a data transmission rate and implement high-rate data transmission and backup.

According to a first aspect, an embodiment of this application provides a data transmission method. The method is applied to a primary gateway. The primary gateway is connected to a secondary gateway, and is connected to a network attached storage NAS. The method includes: The primary gateway receives a first trigger message from the secondary gateway, where the first trigger message includes a transmission requirement for transmission of target service data between the secondary gateway and the NAS. The primary gateway sends a connection request to the NAS, and receives a response message from the NAS. Then, the primary gateway sends a control message, where the control message includes a first communication resource and a second communication resource that are mapped to each other, the first communication resource is a communication resource for transmission of the target service data between the primary gateway and the secondary gateway, and the second communication resource is a communication resource for transmission of the target service data between the primary gateway and the NAS. Next, the primary gateway exchanges the target service data with the secondary gateway over the first communication resource, and exchanges the target service data with the NAS over the second communication resource, to implement transmission of the target service data between the secondary gateway and the NAS.

In this embodiment of this application, the primary gateway allocates the first communication resource and the second communication resource that are mapped to each other to the target service data, and associates two originally independent and unassociated paths (a path between the secondary gateway and the primary gateway and a path between the primary gateway and the NAS) for scheduling. Because the first communication resource and the second communication resource are mapped to each other, transmission of the target service data between the secondary gateway and the primary gateway and between the primary gateway and the NAS is associated with each other and synchronized, to increase a transmission rate of an end-to-end path (the end-to-end path from the secondary gateway, through the primary gateway, to the NAS, or the reverse end-to-end path).

In an optional implementation, the second communication resource and the first communication resource are mapped to each other with respect to at least one of the following: time, frequency, and port.

In this embodiment of this application, time mapping between the second communication resource and the first communication resource can reduce a buffer length of the target service data on the primary gateway, thereby increasing a transmission rate of the target service data; frequency mapping can align transmission frequencies of two sub-channels (a sub-channel between the primary gateway and the secondary gateway and a sub-channel between the primary gateway and the NAS), thereby ensuring stability of transmission of the target service data; and port mapping can provide fixed transmission ports on the two sub-channels, without the requirement of temporarily allocating ports, thereby increasing the transmission rate.

In an optional implementation, that the second communication resource and the first communication resource are mapped to each other with respect to time includes at least one of the following: a fixed timing sequence exists between a time slice of the first communication resource and a time slice of the second communication resource; and a slot length of the first communication resource and a slot length of the second communication resource are the same or differ by less than a first threshold; and a slot interval of the first communication resource and a slot interval of the second communication resource are the same or differ by less than a second threshold.

In this embodiment of this application, the fixed timing sequence exists between the time slice of the first communication resource and the time slice of the second communication resource, so that buffering duration of the target service data on the primary gateway can be reduced, thereby increasing the transmission rate; the slot lengths of the first communication resource and the second communication resource differ by less than the first threshold, so that the slot lengths of the two sub-channels in the end-to-end channel can be aligned, thereby increasing the transmission rate; and the slot interval of the first communication resource and the slot interval of the second communication resource differ by less than the second threshold, so that the time intervals of the two sub-channels in the end-to-end channel can be aligned, thereby increasing the transmission rate. The end-to-end channel is a channel between the NAS, the primary gateway, and the secondary gateway, and the two sub-channels are the channel between the NAS and the primary gateway and the channel between the primary gateway and the secondary gateway.

In an optional implementation, the transmission requirement includes at least one of the following of the target service data: a transmission direction, a bandwidth requirement, a rate requirement, a service type, a bandwidth rate, and a terminal identifier. The transmission direction of the target service data includes: a first transmission direction from the NAS to the secondary gateway, and/or a second transmission direction from the secondary gateway to the NAS.

In an optional implementation, if the transmission direction of the target service data includes the first transmission direction from the NAS to the secondary gateway, the second communication resource includes a first uplink communication resource from the NAS to the primary gateway, and the first communication resource includes a first downlink communication resource from the primary gateway to the secondary gateway; or if the transmission direction of the target service data includes the second transmission direction from the secondary gateway to the NAS, the first communication resource includes a second uplink communication resource from the secondary gateway to the primary gateway, and the second communication resource includes a second downlink communication resource from the primary gateway to the NAS.

In this embodiment of this application, the primary gateway determines data transmission directions on the two sub-channels (the channel between the secondary gateway and the primary gateway, namely, the first communication resource, and the channel between the NAS and the primary gateway, namely, the second communication resource) based on the transmission direction of the target service data, to ensure that data transmission directions of parts (that is, the foregoing two sub-channels) of a transmission channel of the target service data are consistent with the transmission direction of the target service data, thereby improving data transmission efficiency.

In an optional implementation, the primary gateway receives the first trigger message from the secondary gateway through a target uplink channel, where the target uplink channel is a fixed communication resource reserved by the primary gateway for the secondary gateway.

In this embodiment of this application, provided that the primary gateway receives a message from the secondary gateway through the target uplink channel, the primary gateway may determine that the message is the first trigger message, to quickly respond to the first trigger message (that is, send a connection request to the NAS based on the first trigger message, and quickly determine and deliver the first communication resource and the second communication resource), thereby increasing a speed of setting up the end-to-end channel.

In an optional implementation, the first communication resource and the second communication resource are associated with each other with respect to at least one of the following: bandwidth size and transmission rate. The association with each other may be reflected as a same or similar value.

In this embodiment of this application, because the first communication resource and the second communication resource are different segments of paths for sequentially transmitting the target service data over a network, the first communication resource and the second communication resource only need to meet the transmission requirement (for example, a bandwidth size or a transmission rate) of the target service data. Two communication resources having same or similar communication parameters can be better adapted to the transmission requirement of the target service data, thereby ensuring high-rate end-to-end transmission of the target service data over the network.

In an optional implementation, the first communication resource and the second communication resource include time slices and/or slots.

A packet for transmitting service data between the primary gateway, the secondary gateway, and the NAS is usually an Ethernet packet in a layer 3 network. If the target service data is transmitted in a form of an Ethernet packet, the target service data needs to compete with other service data for a communication resource in the layer 3 network, resulting in low transmission efficiency. Resources such as time slices and slots are resources in a lower layer 2 network. In this embodiment of this application, the first communication resource and the second communication resource are allocated in the layer 2 network, and a communication resource of the target service data is isolated from a resource of other service data. The target service data does not need to compete with other service data for a communication resource, and transmission efficiency is high. In addition, compared with transmission in a form of an Ethernet packet in the layer 3 network, transmission over the lower layer 2 network reduces cross-layer data transmission over the network and improves the data transmission efficiency.

According to a second aspect, an embodiment of this application provides a data transmission method. The method is applied to a secondary gateway, and the secondary gateway is connected to a primary gateway. The method includes: The secondary gateway sends a first trigger message to the primary gateway, where the first trigger message includes a transmission requirement for transmission of target service data between the secondary gateway and a network attached storage NAS. The secondary gateway receives a control message from the primary gateway, where the control message includes a first communication resource and a second communication resource that are mapped to each other, the first communication resource is a communication resource for transmission of the target service data between the primary gateway and the secondary gateway, and the second communication resource is a communication resource for transmission of the target service data between the primary gateway and the NAS. The secondary gateway exchanges the target service data with the primary gateway over the first communication resource, to implement transmission of the target service data between the NAS, the primary gateway, and the secondary gateway.

In an optional implementation, a communication connection is set up between the secondary gateway and the terminal device, and before sending the first trigger message to the primary gateway, the secondary gateway receives a second trigger message from the terminal device via a terahertz protocol, where the second trigger message includes transmission information of the target service data. Then, the secondary gateway determines, based on the transmission information, the transmission requirement for transmission of the target service data between the secondary gateway and the NAS.

In this embodiment of this application, the second trigger message and the target service data are transmitted via the terahertz protocol. According to the method provided in this embodiment of this application, a transmission rate of the target service data is increased, so that the transmission rate of the target service data between the NAS, the primary gateway, and the secondary gateway reaches a terahertz level, thereby implementing data transmission at a terahertz rate from the NAS, through the secondary gateway, to the terminal device.

In an optional implementation, before the secondary gateway receives the second trigger message from the terminal device via the terahertz protocol, the secondary gateway sends a beacon frame via the terahertz protocol, where the beacon frame is for announcing existence of the secondary gateway to the terminal device.

In an optional implementation, the transmission information of the target service data includes at least one of the following: a transmission direction, a media type, a data amount, and a transmission rate of the target service data.

According to a third aspect, an embodiment of this application provides a data transmission method. The method is applied to a network attached storage NAS, and the NAS is connected to a primary gateway. The method includes: The NAS receives a connection request from the primary gateway. Then, the NAS sends a response message to the primary gateway in a target uplink time slice. Next, the NAS receives a control message from the primary gateway, where the control message includes a first communication resource and a second communication resource that are mapped to each other, the first communication resource is a communication resource for transmission of target service data between the primary gateway and the secondary gateway, and the second communication resource is a communication resource for transmission of the target service data between the primary gateway and the NAS. After receiving the control message, the NAS can exchange the target service data with the primary gateway over the second communication resource, to implement transmission of the target service data between the NAS, the primary gateway, and the secondary gateway.

According to a fourth aspect, an embodiment of this application provides a gateway. The gateway includes a processor and a memory, and the processor is coupled to the memory. The memory is configured to store a program. The processor is configured to execute the computer program (or computer-executable instructions) stored in the memory, to enable the processor to perform the method according to any one of the first aspect and the possible implementations of the first aspect, or to enable the apparatus to perform the method according to any one of the second aspect and the possible implementations of the second aspect.

According to a fifth aspect, an embodiment of this application provides a network attached storage NAS. The NAS includes a processor and a memory, and the processor is coupled to the memory. The memory is configured to store a program. The processor is configured to execute a computer program (or computer-executable instructions) stored in the memory, to enable the processor to perform the method according to any one of the third aspect or the possible implementations of the third aspect.

According to a sixth aspect, an embodiment of this application provides a communication network. The network includes a primary gateway, a secondary gateway, and a network attached storage NAS, and the primary gateway is connected to the secondary gateway and the NAS. The primary gateway is configured to perform the method according to the first aspect, and the secondary gateway is configured to perform the method according to the second aspect.

In an optional implementation, the secondary gateway is connected to a terminal device. The secondary gateway includes a terahertz module, and the secondary gateway communicates with the terminal device at a terahertz frequency through the terahertz module.

According to a seventh aspect, this application provides a computer-readable storage medium. The computer-readable storage medium stores a computer program. When the computer program is run, the method according to any one of the foregoing aspects is implemented.

According to an eighth aspect, a computer program product is provided. When the computer program product is executed on a computer, the computer performs the method according to any one of the foregoing aspects.

For beneficial effect of the second aspect to the eighth aspect, refer to the first aspect. Details are not described herein again.

### BRIEF DESCRIPTION OF DRAWINGS

FIG. 1 is a diagram of an architecture of a wireless communication network according to this application;
FIG. 2 is a schematic flowchart of a data transmission method according to an embodiment of this application;
FIG. 3 is a diagram of a primary gateway buffer in a data transmission method according to an embodiment of this application;
FIG. 4 is a diagram of an FTTR network according to an embodiment of this application;
FIG. 5 is another schematic flowchart of a data transmission method according to an embodiment of this application;
FIG. 6 is a diagram of a message encapsulation format and mechanism according to an embodiment of this application;
FIG. 7 is a diagram of a structure of a gateway according to an embodiment of this application; and
FIG. 8 is a diagram of a structure of a NAS according to an embodiment of this application.

### DESCRIPTION OF EMBODIMENTS

The following describes embodiments of this application with reference to accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that terms used in such a way are interchangeable in proper circumstances, and this is merely a distinguishing manner used when objects that have a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device. In addition, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

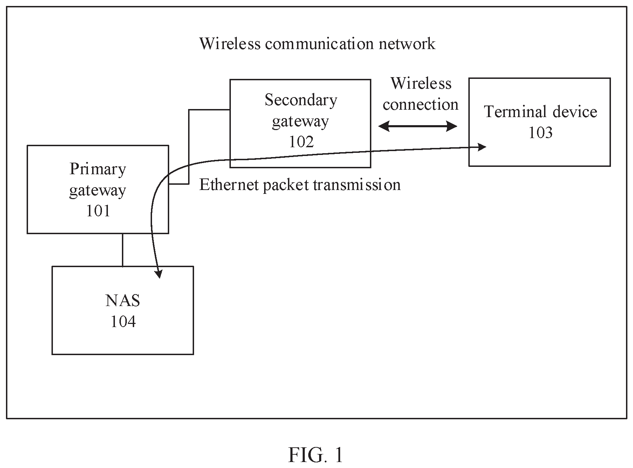

FIG. 1 is a diagram of a structure of a wireless communication network according to this application. As shown in FIG. 1, the wireless communication network 100 is a point-to-multipoint (point-to-multipoint, P2MP) architecture, and includes a primary gateway 101, a secondary gateway 102, a terminal device 103, and a NAS 104. The secondary gateway 102 may implement a connection to the terminal device 103 through a wireless or wired interface.

As shown in FIG. 1, the secondary gateway 102 is connected to the terminal device 103 in a wired or wireless manner, to implement communication between the terminal device 103 and the primary gateway 101. The NAS 104 may be configured to implement data storage and backup, media data collection, and the like, that is, serve as a data provider. The primary gateway 101 and the NAS 104 are connected in a wired or wireless manner, and the primary gateway 101 and the secondary gateway 102 are also connected in a wired or wireless manner. The terminal device 103 exchanges data with the NAS 104 through the secondary gateway 102 and the primary gateway 101, to implement operations such as reading/writing data on the NAS 104.

In an optional implementation, the wireless communication network is a fiber to the room (fiber to the room, FTTR) network, the primary gateway 101 is a main FTTR unit (main FTTR unit, MFU) in the FTTR network, the secondary gateway 102 is a sub FTTR unit (sub FTTR unit, SFU) in the FTTR network, and the NAS 104 is a data provider like a network attached storage NAS or a camera.

The MFU is a core of the FTTR network. It is connected to an optical line terminal (optical line terminal, OLT) to be connected to an upper-layer network, and provides an optical port to be connected to an SFU using a P2MP mode to form the FTTR network; and provides user-side interfaces such as Ethernet and Wi-Fi interfaces to communicate with terminal devices, and forwards, controls, and manages data of terminal devices and the SFU in the FTTR network.

The SFU (secondary gateway 102) is connected to the MFU (primary gateway 101) through an optical fiber, communicates with the terminal device 103 through Wi-Fi and Ethernet interfaces, provides a bridging function to forward data of the terminal device 103 to the MFU (primary gateway 101), and is managed and controlled by the MFU (primary gateway 101).

Data providers such as the network storage auxiliary NAS and camera implement data transmission with the SFU (secondary gateway 102) by accessing the MFU (primary gateway 101), to implement data transmission with the terminal device 103.

In an optional implementation, the secondary gateway 102 and the NAS 104 may alternatively be terminal devices that support a specific data transmission protocol. For example, the secondary gateway 102 is a computer that supports a web-based distributed authoring and versioning (Web-based distributed authoring and versioning, WebDAV) transmission protocol, and serves as a data provider in the WebDAV protocol. The NAS 104 also supports the WebDAV transmission protocol, and serves as a data transmitting party in the WebDAV transmission protocol. The terminal device 103 communicates with the secondary gateway 102 through the NAS 104, to implement fast data reading/writing.

Generally, service data is exchanged between the primary gateway 101 and the NAS 104 (data provider) and between the primary gateway 101 and the secondary gateway 102 in a form of Ethernet packets that comply with the IEEE 802.11 standards. Due to reasons such as a complex cross-layer protocol, a limited air interface transmission rate, and a large quantity of operation processes, a data transmission rate between the data provider like the NAS and the terminal device is limited. Consequently, efficient data transmission and backup cannot be simply implemented, and user experience is poor.

Optionally, in addition to the FTTR network, the wireless communication network shown in FIG. 1 may be another P2MP network. This is not limited in this application.

For example, in a monitoring network, the primary gateway 101 may be a primary camera in the network, and the secondary gateway 102 may be a secondary camera in the network (the secondary camera is managed and controlled by the primary camera). For example, in a network of a data center, the primary gateway 101 may be a primary node of the data center, and the secondary gateway 102 may be a subnode of the data center (the subnode is managed and controlled by the primary node).

To increase a data transmission rate in the P2PMP network and implement high-rate data transmission and backup, embodiments of this application provide a data transmission method and a related device. According to the data transmission method provided in embodiments of this application, setup of a fast transmission channel between a secondary gateway 102 and a NAS 104 is implemented through a primary gateway 101, to increase a transmission rate of service data between the secondary gateway 102 and the NAS 104.

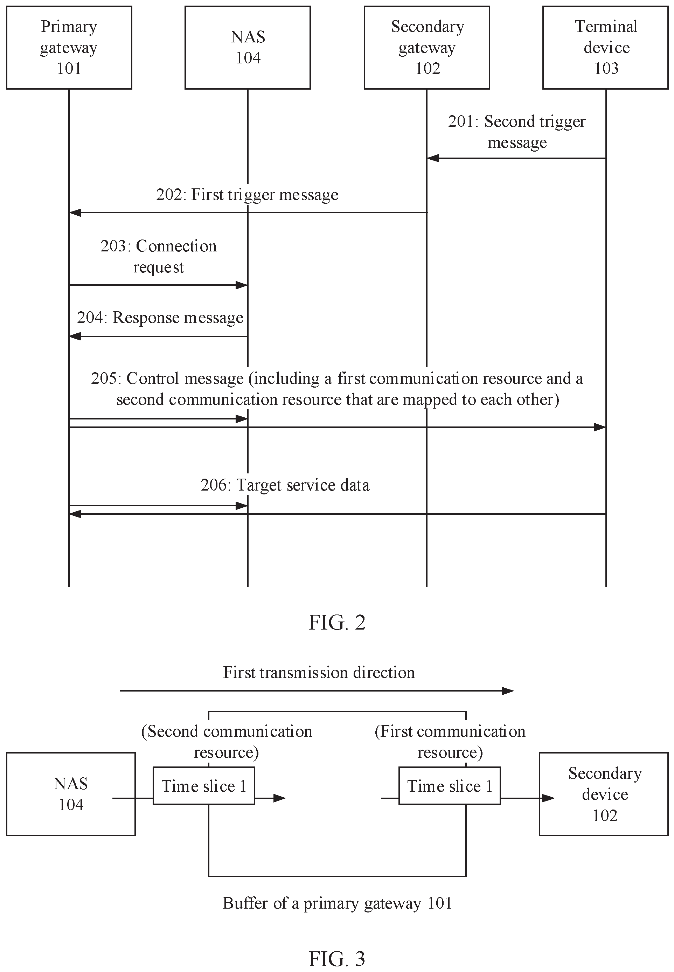

FIG. 2 is a flowchart of a data transmission method according to an embodiment of this application. For a primary gateway 101, a secondary gateway 102, a NAS 104, and a terminal device 103 in FIG. 2, refer to corresponding descriptions in FIG. 1. Details are not described herein again. As shown in FIG. 2, the data transmission method according to this embodiment of this application includes the following steps.

201: The secondary gateway 102 receives a second trigger message from the terminal device 103.

For example, the terminal device 103 is a mobile phone. When a user operates a read/write request for target service data on the mobile phone, the mobile phone (terminal device 103) may send the second trigger message to the secondary gateway 102. The second trigger message is for requesting a read/write operation on the target service data from a network.

The second trigger message may include transmission information of the target service data, for example, a transmission direction, a media type, a data amount, and a transmission rate of the target service data. This is not limited in this application.

From the second trigger message, the secondary gateway 102 may learn of transmission requirements of transmitting the target service data between the secondary gateway 102 and the NAS 104, to request the primary gateway 101 to set up a fast transmission channel between the secondary gateway 102 and the NAS 104 for the target service data.

Optionally, the transmission requirements may include the transmission direction, a bandwidth requirement, a rate requirement, a service type, a bandwidth rate, a terminal identifier, and the like of the target service data. As an air interface message, the second trigger message may include a field of each transmission requirement, and indicates the corresponding transmission requirement.

For example, if the second trigger message is the read request for the target service data, a read/write field indicates the read operation. A corresponding transmission requirement is a transmission direction of the target service data from the NAS 104 to the secondary gateway 102, namely, a data transmission direction in which the terminal device 103 reads the target service data from the NAS 104 through the secondary gateway 102.

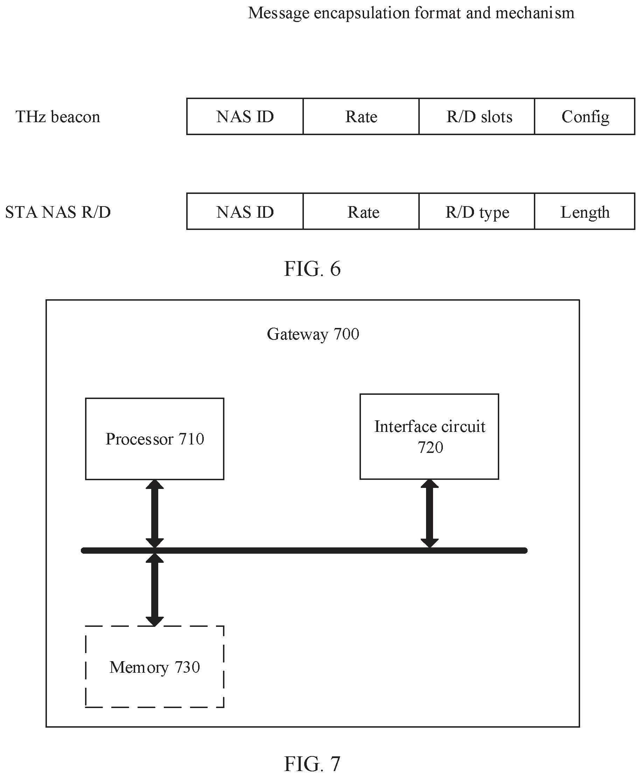

For a frame structure of the second trigger message, refer to a (STA NAS R/D) frame structure in FIG. 6. A NAS ID field is a field of a NAS in which the target service data is located, namely, a field of the NAS 104. A rate field is a field of the rate requirement, and indicates a transmission rate requirement of the target service data. An R/D type field is a read/write field, and indicates the read operation or the write operation on the target service data.

If the second trigger message is the write request for the target service data, a read/write field indicates the write operation. A corresponding transmission requirement is a transmission direction of the target service data from the secondary gateway 102 to the NAS 104, namely, a data transmission direction in which the terminal device 103 writes the target service data to the NAS 104 through the secondary gateway 102.

Optionally, if the user requests high-rate data transmission (for example, terahertz-level transmission), a transmission rate requirement of the target service data indicated by the second trigger message may be at a terahertz or higher level.

Optionally, the terminal device 103 and the secondary gateway 102 may include terahertz modules. The terahertz module is configured to implement communication at a terahertz frequency. If the transmission rate requirement is at the terahertz or higher level, the terminal device 103 may send (specifically, through the terahertz module on the terminal device 103) the second trigger message to the secondary gateway 102 via a terahertz protocol. The secondary gateway 102 receives the second trigger message via the terahertz protocol, and the second trigger message may be received through the terahertz module on the secondary gateway 102.

202: The secondary gateway 102 sends a first trigger message to the primary gateway 101.

As described above, the secondary gateway 102 may determine, based on the second trigger message, the transmission requirement of the target service data between the secondary gateway 102 and the NAS 104, to send the first trigger message to the primary gateway 101.

The first trigger message includes the transmission requirement for transmission of the target service data between the secondary gateway 102 and the NAS 104, and is for requesting the primary gateway 101 to set up the fast transmission channel between the secondary gateway 102 and the NAS 104 for the target service data.

Optionally, the primary gateway may reserve a fixed communication resource for the secondary gateway to transmit the first trigger message. The communication resource may be an uplink channel (referred to as a target uplink channel in this embodiment of this application). When a message from the secondary gateway is received through the uplink channel, the primary gateway may determine that the message is the first trigger message, to quickly respond to the first trigger message (that is, send a connection request to the NAS based on the first trigger message, and quickly determine and deliver a first communication resource and a second communication resource), thereby increasing a speed of setting up an end-to-end channel.

203: The primary gateway 101 sends a connection request to the NAS 104.

The primary gateway 101 may determine, based on the first trigger message, the NAS 104 in which the target service data is located. To set up the fast transmission channel between the secondary gateway 102 and the NAS 104, the primary gateway sends the connection request to the NAS 104, requesting to set up a handshake connection to the NAS 104.

Optionally, the first trigger message may include the terminal identifier of the target service data, and the terminal identifier indicates the NAS 104 in which the target service data is located. Optionally, the first trigger message may alternatively include other information for indicating a device (the NAS 104) in which the target service data is located. For example, if the first trigger message includes an identifier of a web-based distributed authoring and versioning (Web-based distributed authoring and versioning, WebDAV) transmission protocol, the primary gateway 101 may determine, based on the identifier of the transmission protocol, that a secondary gateway that supports the transmission protocol in the network is the NAS 104 that provides the target service data, for example, the NAS.

The connection request is for requesting to obtain content related to service data transmission, such as capability information, a supported rate, a supported bandwidth, and a buffer length of the NAS 104, so that an appropriate communication resource is allocated based on the capability information and the like of the NAS 104 when the fast transmission channel of the target service data is subsequently set up.

Optionally, the connection request may further include the transmission requirement like the transmission direction and the transmission rate of the target service data, to determine whether the NAS 104 can meet the transmission requirement of the target service data.

204: The primary gateway 101 receives a response message from the NAS 104.

After receiving the connection request from the primary gateway 101, the NAS 104 may send the response message to the primary gateway 101. The response message includes the content related to service data transmission, such as the capability information, the supported rate, the supported bandwidth, the buffer length, and a port number of the NAS 104.

Optionally, the response message may further include an indicator indicating whether to respond to the request of the primary gateway. If a current remaining communication resource of the NAS 104 can still meet the transmission requirement of the target service data, the response message may include an indicator indicating that it is determined to respond, to notify the primary gateway 101 to continue to set up the fast transmission channel. If the current remaining communication resources of the NAS 104 cannot meet the transmission requirement of the target service data, or even the current remaining communication resources can no longer be used for service data transmission, the response message may include an indicator indicating not to respond, to notify the primary gateway 101 to stop setting up the fast transmission channel.

Optionally, if the current remaining communication resource of the NAS 104 cannot meet the transmission requirement of the target service data, the NAS 104 may alternatively include, in the response message, a communication parameter that may be currently supported by the NAS 104, for example, a supported uplink bandwidth and a supported downlink transmission rate, so that the primary gateway 101 allocates an appropriate communication resource based on the current state of the NAS 104. This is not limited in this application.

205: The primary gateway sends a control message, where the control message includes the first communication resource and the second communication resource that are associated with each other.

The primary gateway 101 may allocate the first communication resource and the second communication resource based on the transmission requirement of the target service data (between the secondary gateway 102 and the NAS 104) in the first trigger message, and establish a mapping between the first communication resource and the second communication resource. The first communication resource is a communication resource for transmission of the target service data between the primary gateway 101 and the secondary gateway 102, and the second communication resource is a communication resource for transmission of the target service data between the primary gateway 101 and the NAS 104.

For example, the transmission requirement indicated by the first trigger request is a first transmission direction of the target service data from the NAS 104 to the secondary gateway 102 (namely, the data transmission direction in which the terminal device 103 reads the target service data from the NAS 104 through the secondary gateway 102), and a transmission rate of 5 Gbps.

In this case, the primary gateway 101 needs to allocate, in the first transmission direction, a first uplink communication resource (the second communication resource) from the NAS 104 to the primary gateway 101 and a first downlink communication resource (the first communication resource) from the primary gateway 101 to the secondary gateway 102, to set up an end-to-end channel from the NAS 104, through the primary gateway 101, to the secondary gateway 102.

In addition, to meet a requirement of the transmission rate of 5 Gbps, the primary gateway 101 enables both a rate of the first downlink communication resource and a rate of the first uplink communication resource to be greater than or equal to 5 Gbps. In addition, to ensure that the transmission rate of the target service data throughout the end-to-end channel meets the requirement of 5 Gbps, the primary gateway 101 further needs to establish a mapping between time of the second communication resource to time of the first communication resource.

For example, a fixed timing sequence exists between a time slice of the first communication resource and a time slice of the second communication resource, to reduce buffering duration of the target service data on the primary gateway 101, thereby increasing the transmission rate. As shown in FIG. 3, if the transmission direction of the target service data is from the NAS 104 to the secondary gateway 102, data should be first transmitted from the NAS 104 to the primary gateway 101, and then transmitted from the primary gateway 101 to the secondary gateway 102. In the first transmission resource and the second transmission resource, time slices for transmitting same data content correspond to each other, for example, two time slices 1 in FIG. 3. Time slices that correspond to each other should have a fixed timing sequence, so that data is first received and then transmitted by the primary gateway 101. In other words, a time slice in the second communication resource should be earlier in a timing sequence than a time slice that is in the first communication resource and that corresponds to the time slice in the second communication resource.

The first transmission direction is merely an example. The transmission direction indicated by the first trigger request may alternatively be a second transmission direction of the target service data from the secondary gateway 102 to the NAS 104 (namely, the data transmission direction in which the terminal device 103 writes the target service data to the NAS 104 through the secondary gateway 102). In this case, the primary gateway 101 needs to allocate, in the second transmission direction, a second uplink communication resource (the first communication resource) from the secondary gateway 102 to the primary gateway 101 and a second downlink communication resource (the second communication resource) from the primary gateway 101 to the NAS 104, to set up an end-to-end channel from the secondary gateway 102, through the primary gateway 101, to the NAS 104.

In this embodiment of this application, the primary gateway 101 determines data transmission directions on two sub-channels (a channel between the secondary gateway 102 and the primary gateway 101, namely, the first communication resource, and a channel between the NAS 104 and the primary gateway 101, namely, the second communication resource) based on the transmission direction of the target service data, to ensure that data transmission directions of parts (namely, the two sub-channels) of the transmission channel of the target service data are both consistent with the transmission direction of the target service data, thereby improving data transmission efficiency.

In addition to the timing sequence of the time slices, the time mapping between the first communication resource and the second communication resource may be further implemented using a slot length, a slot interval, and the like, thereby increasing the transmission rate. For example, for the first communication resource and the second communication resource, slot lengths differ by less than a first threshold, and slot intervals differ by less than a second threshold, so that the slot lengths and the time intervals of the two sub-channels in the end-to-end channel are aligned, thereby increasing the transmission rate. The end-to-end channel is a channel from the NAS 104, through the primary gateway 101, to the secondary gateway 102, and the two sub-channels are a channel from the NAS 104 to the primary gateway 101 and a channel from the primary gateway 101 to the secondary gateway 102.

Optionally, in addition to implementing time mapping, the primary gateway 101 may further establish frequency, port, or other mapping between the first communication resource and the second communication resource. Time mapping can reduce a buffer length of the target service data on the primary gateway 101, thereby increasing the transmission rate of the target service data; frequency mapping can align transmission frequencies of the two sub-channels, thereby ensuring stability of transmission of the target service data; and port mapping can provide fixed transmission ports on the two channels, without the requirement of temporarily allocating ports, thereby increasing the transmission rate.

Optionally, the control message may be sent in a dynamic bandwidth allocation (dynamic bandwidth allocation, DBA) packet format.

206: The primary gateway exchanges the target service data with the secondary gateway over the first communication resource, and exchanges the target service data with the NAS over the second communication resource, to implement transmission of the target service data between the secondary gateway and the NAS.

After the primary gateway 101 determines and completes delivery of the first communication resource and the second communication resource, the NAS, the primary gateway, and the secondary gateway may implement transmission of the target service data over the second communication resource and the first communication resource. If the first communication resource and the second communication resource are communication resources at a terahertz or higher level, transmission of the target service data at a terahertz rate may be supported in a network above the secondary gateway 102. The primary gateway 101 may exchange the target service data with the secondary gateway 102 over the first communication resource in a terahertz protocol format, and exchange the target service data with the NAS 104 over the second communication resource in the terahertz protocol format. In this way, the target service data is transmitted between the NAS 104, the secondary gateway 102, and the terminal device 103 at a terahertz rate.

FIG. 2 is used as an example. The transmission requirement of the target service data is a data write direction from the terminal device 103 to the NAS 104. The secondary gateway 102 may receive the target service data from the terminal device 103 via the terahertz protocol, and send the target service data (in a format of the terahertz protocol) to the primary gateway 101 over the first communication resource. The primary gateway 101 then sends the target service data to the NAS 104 over the second communication resource, to implement a write operation on the target service data from the terminal device 103 to the NAS 104.

In this embodiment of this application, the primary gateway 101 allocates the first communication resource and the second communication resource that are mapped to each other to the target service data, and associates two originally independent and unassociated paths (a path between the secondary gateway 102 and the primary gateway 101 and a path between the primary gateway 101 and the NAS 104) for scheduling. Because the first communication resource and the second communication resource are mapped to each other, transmission of the target service data between the secondary gateway 102 and the primary gateway 101 and between the primary gateway 101 and the NAS 104 is associated with each other and synchronized, to increase a transmission rate of an end-to-end path (the end-to-end path from the secondary gateway 102, through the primary gateway 101, to the NAS 104, or the reverse end-to-end path). In this way, a transmission rate of data between the NAS 104, the primary gateway 101, and the secondary gateway 102 reaches a terahertz level, matching a transmission rate of the terahertz module on the secondary gateway 102, thereby implementing data transmission at a terahertz rate from the NAS 104, through the secondary gateway 102, to the terminal device 103.

In this embodiment of this application, the primary gateway 101 may further associate communication parameters such as bandwidth sizes and transmission rates of the first communication resource and the second communication resource with each other (that is, values are the same or similar).

Because the first communication resource and the second communication resource are different segments of paths for sequentially transmitting the target service data over the network, the first communication resource and the second communication resource only need to meet the transmission requirement (for example, the bandwidth size or the transmission rate) of the target service data. The two communication resources having same or similar communication parameters can be better adapted to the transmission requirement of the target service data, thereby ensuring high-rate end-to-end transmission of the target service data over the network.

It should be noted that a quantity of secondary gateways 102 and a quantity of NASs 104 are not limited in embodiments of this application. One secondary gateway 102 may request access (read/write) to target service data from one NAS 104, or a plurality of secondary gateways 102 may request access to target service data from a same NAS 104, or one secondary gateway 102 may request access to target service data from a plurality of NASs 104, or a plurality of secondary gateways 102 may separately request access to target service data from respective corresponding NASs 104. This is not limited in this application.

If one secondary gateway 102 requests access to target service data from a plurality of NASs 104, in Step 205, the primary gateway 101 may allocate communication resources between the primary gateway 101 and the secondary gateway 102 based on transmission requirements of different target service data (target service data exchanged with the different NASs 104), to obtain first communication resources corresponding to the different target service data, and then allocate a plurality of corresponding second communication resources, where the first communication resources and the second communication resources that correspond to each other are mapped to each other.

If a plurality of secondary gateways 102 request access to target service data from a same NAS 104, similarly, the primary gateway 101 may allocate second communication resources corresponding to different target service data, and then allocate a plurality of corresponding first communication resources. Details are not described herein again.

In embodiments of this application, to improve data transmission efficiency, optimization may be further performed from a plurality of aspects, for example, optimizing a trigger manner, optimizing a transmission protocol, and reserving a dedicated resource to facilitate connection setup. The following describes an optimized solution with a higher transmission rate in a "one-touch transmission" scenario.

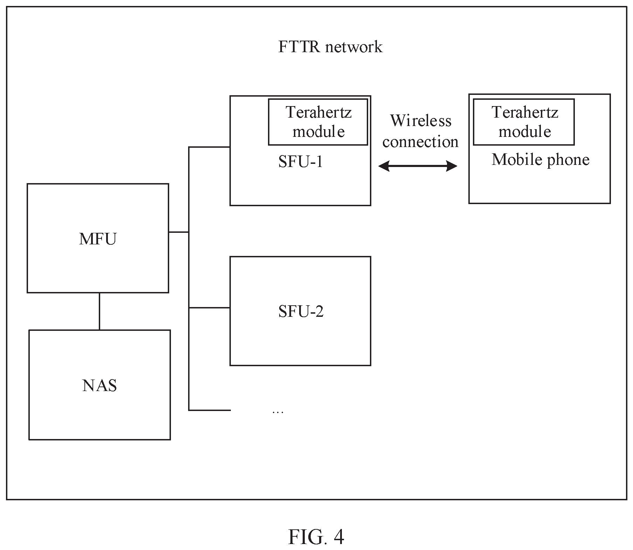

As shown in FIG. 4, a primary gateway 101 is an MFU in an FTTR network, a secondary gateway 102 is an SFU in the FTTR network, and a terminal device 103 is a mobile phone. The SFU and the mobile phone each include a terahertz module, and the terahertz module is configured to transmit an air interface signal at a terahertz frequency.

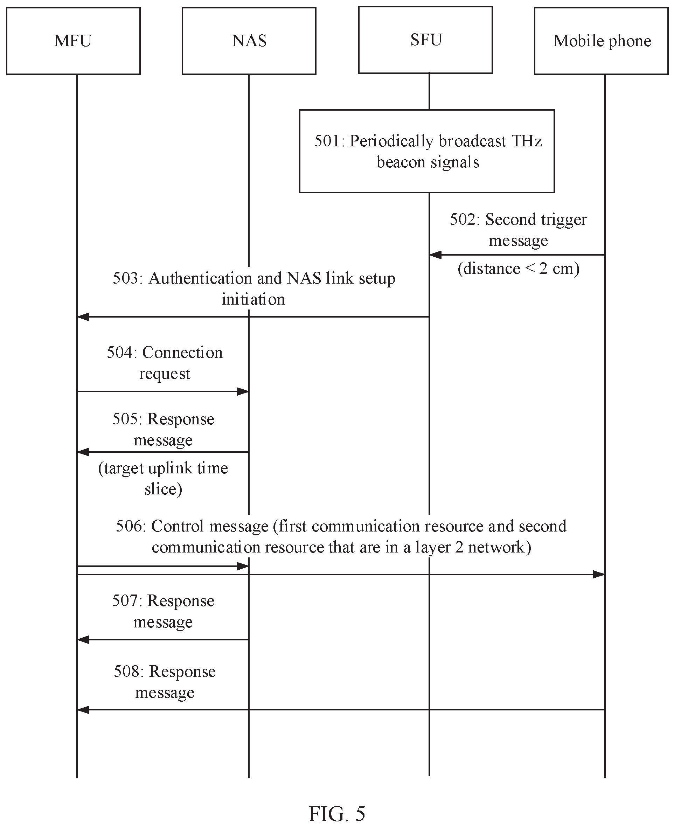

Based on the architecture shown in FIG. 4, a procedure of a data transmission method according to an embodiment of this application is shown in FIG. 5, and includes the following steps.

501: The SFU periodically broadcasts THz beacon signals.

In this embodiment of this application, the SFU and the mobile phone each include a terahertz module, and the terahertz module includes a terahertz antenna, to implement air interface transmission at a terahertz frequency. Terahertz signals have high transmission rates, and therefore support high-rate data transmission.

A transmission distance of the terahertz signal is short, about 2 cm. The SFU can implement terahertz signal transmission with the terminal device only within a signal coverage of the terahertz module, to implement high-rate transmission. Therefore, the SFU periodically broadcasts THz beacon signals, to announce existence of the SFU to a terminal device within a signal coverage (within a range of 2 cm), and announce to the terminal device that the SFU includes the terahertz module and supports high-rate data transmission.

In this embodiment of this application, the THz beacon signal is also referred to as a beacon frame. In addition to the THz beacon signal, the beacon frame may alternatively be a signal of another frequency, for example, a high-frequency signal in a 5 GHz frequency band. In the 5 GHz frequency band, a high-frequency signal has a higher transmission rate than a low-frequency signal, and support higher-rate data transmission.

502: The mobile phone sends a second trigger message.

When a user needs to read the target service data in the NAS, the user operates the mobile phone to open an application (application, APP) corresponding to the NAS, and delivers a corresponding read instruction. After receiving the read instruction, the mobile phone indicates the user to place the mobile phone close to the SFU, to implement communication with the SFU at a terahertz frequency.

After the user places the mobile phone close to the SFU, the mobile phone enters the terahertz signal range of the SFU, and the mobile phone may receive a THz beacon signal sent by the SFU, to determine an identity of the SFU (for example, a media access control (media access control, MAC) address of the SFU), and determine that the mobile phone can communicate with the SFU at a terahertz frequency, thereby implementing high-rate communication.

Therefore, the mobile phone sends the second trigger message to the SFU through the terahertz module. For a description of the second trigger message, refer to Step 201 in the embodiment shown in FIG. 2. Details are not described herein again.

Optionally, if the beacon frame is a signal outside the terahertz frequency range, for example, a high-frequency signal in the 5 GHz frequency band, the second trigger message also corresponds to a signal at a frequency of the beacon frame.

503: The SFU performs authentication and initiates NAS link setup.

After receiving the second trigger message from the mobile phone through the terahertz module, the SFU authenticates the mobile phone, and determines security of the mobile phone, whether the mobile phone has permission for a NAS service, and the like. After determining that the mobile phone is secure and has the permission for the NAS service, the SFU may initiate NAS link setup, that is, send the first trigger message to the MFU in Step 202 in the embodiment shown in FIG. 2. For specific content, refer to Step 202. Details are not described herein again.

504: The MFU sends a connection request to the NAS.

For Step 504, refer to Step 203 in the embodiment shown in FIG. 2. Details are not described herein again.

505: The NAS sends a response message to the MFU in a target uplink time slice.

A target uplink time slice may be agreed on between the MFU and the NAS, and the target uplink time slice is a time slice dedicated to transmitting the response message. The response message does not need to compete with other data transmitted through the NAS for a time slice, and the transmission efficiency is high. Therefore, a handshake speed between the MFU and the NAS can be increased, thereby increasing a speed of setting up a communication connection between the secondary gateway, the primary gateway, and the NAS, and increasing a transmission rate of the target service data.

For a detailed description of the response message, refer to Step 204 in the embodiment shown in FIG. 2. Details are not described herein again.

506: The MFU sends a control message, where the control message includes a first communication resource and a second communication resource in a layer 2 network.

After receiving the response message from the NAS, the MFU may allocate the first communication resource and the second communication resource that are associated with each other. Optionally, the MFU may allocate the first communication resource and the second communication resource in the layer 2 network. In other words, the first communication resource and the second communication resource include allocated resources such as time slices and slots.

A packet for transmitting service data between the MFU and the SFU and between the MFU and the NAS is usually an Ethernet packet in a layer 3 network. If the target service data is transmitted in a form of an Ethernet packet, the target service data needs to compete with other service data for a communication resource in the layer 3 network, resulting in low transmission efficiency. In this embodiment of this application, the first communication resource and the second communication resource are allocated in the layer 2 network, and a communication resource of the target service data is isolated from a resource of other service data. The target service data does not need to compete with other service data for a communication resource, and transmission efficiency is high. In addition, compared with transmission in a form of an Ethernet packet in the layer 3 network, transmission over the lower layer 2 network reduces cross-layer data transmission over the network and improves the data transmission efficiency.

It should be noted that, in this embodiment of this application, a specific first communication resource and a specific second communication resource may alternatively be allocated to the target service data in the layer 3 network. This is not limited in this application.

507: The MFU receives a response message from the NAS.

After receiving the control message, the NAS sends the response message to the MFU. The MFU may determine that the second communication resource is transmitted to the NAS, and a fast channel between the MFU and the NAS is set up.

508: The MFU receives a response message from the SFU.

After receiving the control message, the SFU sends the response message to the MFU. The MFU may determine that the first communication resource is transmitted to the SFU, and a fast channel between the MFU and the SFU is set up.

A timing sequence of Step 507 and Step 508 is not limited in this embodiment of this application. After both Step 507 and Step 508 are completed, the MFU may determine that the fast channel between the MFU and the NAS has been set up, and the fast channel between the MFU and the SFU has been set up, and the target service data can be transmitted through the fast transmission channel.

It should be noted that, if the second trigger message is a message of a terahertz frequency, air interface transmission of the target service data may be performed between the SFU and the mobile phone through the terahertz modules. Terahertz signals have high rates, and therefore can improve the transmission efficiency of the target service data.

After Step 507 and Step 508, once transmission of the target service data is completed, the user moves the mobile phone away (from the communication range of the terahertz module on the SFU). The SFU determines that no terahertz signal from the mobile phone is received for a long time, and may determine that the target service data cannot continue to be transmitted through the fast transmission channel, and therefore sends a request message to the MFU to release the first communication resource and the second communication resource. Optionally, the user may alternatively move the mobile phone away in another case, for example, when the mobile phone is low on battery or under heavy load, to interrupt transmission of the target service data. This is not limited in this application.

In this embodiment of this application, the data transmission method shown in FIG. 2 is used as a basis to set up the fast transmission channel. The mapping between the first communication resource and the second communication resource can improve the transmission efficiency of the target service data between the secondary gateway 102 and the NAS 104. Then, the transmission efficiency is further optimized in the following several aspects in the embodiment shown in FIG. 5.

In the embodiments shown in FIG. 4 and FIG. 5, service data is transmitted between the secondary gateway 102 (for example, the SFU) and the terminal device 103 (for example, the mobile phone) through the terahertz modules. Terahertz signals have high rates, and therefore can improve air interface transmission efficiency of the target service data, thereby improving the overall data transmission efficiency.

In Step 505, the target uplink time slice is reserved to increase the response speed of the NAS 104 to the connection request of the primary gateway 101 (for example, the MFU), thereby increasing a speed of setting up the fast channels and improving the data transmission efficiency.

In Step 506, the first communication resource and the second communication resource are allocated in the layer 2 network, so that the transmission link of the target service data is delivered to the lower layer, thereby reducing cross-layer transmission of the target service data, reducing impact of a cross-layer protocol on the transmission rate, and improving the data transmission efficiency.

It should be noted that one or more of optimization measures in the foregoing several aspects may appear in a same solution. This is not limited in this application. For example, as shown in FIG. 5, all the foregoing optimization measures are applied, or only the terahertz modules and resource allocation in the layer 2 network are applied. This is not limited in this application.

In embodiments of this application, because the transmission range of the terahertz module is small, the terminal device 103 needs to be close to the secondary gateway 102 (for example, the SFU), to implement setup of the fast transmission channel and fast transmission of the target service data. After transmission of the target service data is completed, transmission of the target service data can be stopped as long as the terminal device moves to a position far away from the secondary gateway 102. For the user, a source and a destination of fast service data transmission are visualized, thereby implementing "one-touch transmission" of service data that can be perceived by the user.

An embodiment of this application further provides a gateway 700. As shown in FIG. 7, the gateway 700 includes a processor 710 and an interface circuit 720. The processor 710 and the interface circuit 720 are coupled to each other. It may be understood that the interface circuit 720 may be a transceiver or an input/output interface. Optionally, the gateway 700 may further include a memory 730, configured to store instructions executed by the processor 710, or store input data needed by the processor 710 to run the instructions, or store data generated after the processor 710 runs the instructions.

When the gateway 700 is the primary gateway 101 in the embodiments shown in FIG. 2 to FIG. 6 or a chip applied to the primary gateway 101, the gateway 700 implements functions of the primary gateway 101 in the foregoing method embodiments.

When the communication apparatus is the secondary gateway 102 in the embodiments shown in FIG. 2 to FIG. 6 or a chip applied to the secondary gateway 102, the gateway 700 implements functions of the secondary gateway 102 in the foregoing method embodiments.

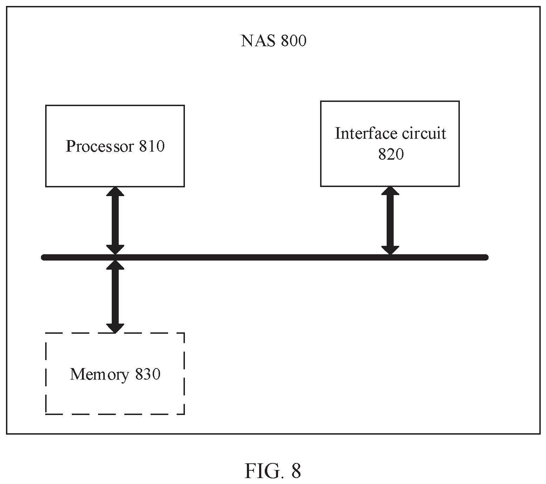

An embodiment of this application further provides a NAS 800. As shown in FIG. 8, the NAS 800 includes a processor 810 and an interface circuit 820. The processor 810 and the interface circuit 820 are coupled to each other. It may be understood that the interface circuit 820 may be a transceiver or an input/output interface.

Optionally, the NAS 800 may further include a memory 830, configured to store instructions executed by the processor 810, or store input data needed by the processor 810 to run the instructions, or store data generated after the processor 810 runs the instructions.

The NAS 800 is configured to implement functions of the NAS 104 in the embodiments shown in FIG. 2 to FIG. 6.

The gateway 700 used as the primary gateway 101, the gateway 700 used as the secondary gateway 102, and the NAS 800 are applied to the network structure shown in FIG. 1, to form a communication network provided in embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A data transmission method, applied to a primary gateway, wherein the primary gateway is connected to a secondary gateway and a network attached storage NAS, and the method comprises:
receiving a first trigger message from the secondary gateway, wherein the first trigger message comprises a transmission requirement for transmission of target service data between the secondary gateway and the NAS;
sending a connection request to the NAS, and receiving a response message from the NAS;
sending a control message, wherein the control message comprises a first communication resource and a second communication resource that are mapped to each other, the first communication resource is a communication resource for transmission of the target service data between the primary gateway and the secondary gateway, and the second communication resource is a communication resource for transmission of the target service data between the primary gateway and the NAS; and
exchanging the target service data with the secondary gateway over the first communication resource, and exchanging the target service data with the NAS over the second communication resource, to implement transmission of the target service data between the secondary gateway and the NAS.

2. The method according to claim 1, wherein the second communication resource and the first communication resource are mapped to each other with respect to at least one of the following:
time, frequency, and port.

3. The method according to claim 2, wherein that the second communication resource and the first communication resource are mapped to each other with respect to time comprises at least one of the following:
a fixed timing sequence exists between a time slice of the first communication resource and a time slice of the second communication resource; and
a slot length of the first communication resource and a slot length of the second communication resource are the same or differ by less than a first threshold; and
a slot interval of the first communication resource and a slot interval of the second communication resource are the same or differ by less than a second threshold.

4. The method according to any one of claims 1 to 3, wherein the transmission requirement comprises at least one of the following of the target service data:
a transmission direction, a bandwidth requirement, a rate requirement, a service type, a bandwidth rate, and a terminal identifier; and
the transmission direction of the target service data comprises a first transmission direction from the NAS to the secondary gateway and/or a second transmission direction from the secondary gateway to the NAS.

5. The method according to claim 4, wherein
if the transmission direction of the target service data comprises the first transmission direction from the NAS to the secondary gateway, the second communication resource comprises a first uplink communication resource from the NAS to the primary gateway, and the first communication resource comprises a first downlink communication resource from the primary gateway to the secondary gateway; or
if the transmission direction of the target service data comprises the second transmission direction from the secondary gateway to the NAS, the first communication resource comprises a second uplink communication resource from the secondary gateway to the primary gateway, and the second communication resource comprises a second downlink communication resource from the primary gateway to the NAS.

6. The method according to any one of claims 1 to 5, wherein receiving the first trigger message from the secondary gateway comprises:
receiving the first trigger message from the secondary gateway through a target uplink channel, wherein the target uplink channel is a fixed communication resource reserved by the primary gateway for the secondary gateway.

7. The method according to any one of claims 1 to 6, wherein the first communication resource and the second communication resource are associated with each other with respect to at least one of the following:
bandwidth size and transmission rate.

8. The method according to any one of claims 1 to 7, wherein the first communication resource and the second communication resource comprise time slices and/or slots.

9. A data transmission method, applied to a secondary gateway, wherein the secondary gateway is connected to a primary gateway, and the method comprises:
sending a first trigger message to the primary gateway, wherein the first trigger message comprises a transmission requirement for transmission of target service data between the secondary gateway and a network attached storage NAS;
receiving a control message from the primary gateway, wherein the control message comprises a first communication resource and a second communication resource that are mapped to each other, the first communication resource is a communication resource for transmission of the target service data between the primary gateway and the secondary gateway, and the second communication resource is a communication resource for transmission of the target service data between the primary gateway and the NAS; and
exchanging the target service data with the primary gateway over the first communication resource, to implement transmission of the target service data between the NAS, the primary gateway, and the secondary gateway.

10. The method according to claim 9, wherein a communication connection is set up between the secondary gateway and a terminal device, and before the sending a first trigger message to the primary gateway, the method further comprises:
receiving a second trigger message from the terminal device via a terahertz protocol, wherein the second trigger message comprises transmission information of the target service data; and
determining, based on the transmission information, the transmission requirement for transmission of the target service data between the secondary gateway and the NAS.

11. The method according to claim 10, wherein before receiving the second trigger message from the terminal device via the terahertz protocol, the method further comprises:
sending a beacon frame via the terahertz protocol, wherein the beacon frame is for announcing existence of the secondary gateway to the terminal device.

12. The method according to claim 10 or 11, wherein the transmission information of the target service data comprises at least one of the following: a transmission direction, a media type, a data amount, and a transmission rate of the target service data.

13. A data transmission method, applied to a network attached storage NAS, wherein the NAS is connected to a primary gateway, and the method comprises:
receiving a connection request from the primary gateway;
sending a response message to the primary gateway in a target uplink time slice;
receiving a control message from the primary gateway, wherein the control message comprises a first communication resource and a second communication resource that are mapped to each other, the first communication resource is a communication resource for transmission of target service data between the primary gateway and the secondary gateway, and the second communication resource is a communication resource for transmission of the target service data between the primary gateway and the NAS; and
exchanging the target service data with the primary gateway over the second communication resource, to implement transmission of the target service data between the NAS, the primary gateway, and the secondary gateway.

14. A gateway, comprising a processor and a memory, wherein the processor is coupled to the memory;
the memory is configured to store a program; and
the processor is configured to execute the program in the memory, to enable the processor to perform the method according to any one of claims 1 to 8 or claims 9 to 12.

15. A network attached storage NAS, comprising a processor and a memory, wherein the processor is coupled to the memory;
the memory is configured to store a program; and
the processor is configured to execute the program in the memory, to enable the processor to perform the method according to claim 13.

16. A communication network, comprising a primary gateway, a secondary gateway, and a network attached storage NAS, wherein the primary gateway is connected to the secondary gateway and the NAS; and
the primary gateway is configured to perform the method according to any one of claims 1 to 8, the secondary gateway is configured to perform the method according to any one of claims 9 to 12, and the NAS is configured to perform the method according to claim 13.

17. The communication network according to claim 16, wherein the secondary gateway is connected to a terminal device; and
the secondary gateway comprises a terahertz module, and the secondary gateway communicates with the terminal device at a terahertz frequency through the terahertz module.

18. A computer-readable storage medium, wherein the computer-readable storage medium stores a program; and when a computer executes the program, the method according to any one of claims 1 to 8, 9 to 12, or 13 is performed.

19. A computer program product, wherein when the computer program product is executed on a computer, the computer performs the method according to any one of claims 1 to 8, 9 to 12, or 13.
